(19) Europäisches Patentamt
European Patent Office
Office européen des brevets

(11) **EP 2 874 306 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(51) Int Cl.:
*H02P 1/44* *(2006.01)*    *H02P 25/04* *(2006.01)*

(21) Anmeldenummer: **14193186.5**

(22) Anmeldetag: **14.11.2014**

(54) **Asynchronmotor und Verfahren zum Betreiben eines Asynchronmotors**

Asynchronous motor and method for operating an asynchronous motor

Moteur asynchrone et procédé d'entraînement d'un moteur asynchrone

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2013 DE 102013112692**

(43) Veröffentlichungstag der Anmeldung:
**20.05.2015 Patentblatt 2015/21**

(73) Patentinhaber: **KRIWAN INDUSTRIE-ELEKTRONIK GMBH**
**74670 Forchtenberg (DE)**

(72) Erfinder: **Peng, Xiaoming**
**74613 Öhringen (DE)**

(74) Vertreter: **Tetzner, Michael et al**
**TETZNER & PARTNER mbB**
**Patent- und Rechtsanwälte**
**Van-Gogh-Strasse 3**
**81479 München (DE)**

(56) Entgegenhaltungen:
**EP-A2- 2 187 494        EP-B1- 1 240 709**
**EP-B1- 1 671 415        DE-A1-102004 012 635**
**DE-A1-102006 034 499    US-A- 6 034 503**

EP 2 874 306 B1

**Beschreibung**

Die Erfindung betrifft einen Asynchronmotor und ein Verfahren zum Betreiben eines Asynchronmotors.

Ein am Wechselstromnetz betriebener Asynchronmotor benötigt zur Erzeugung eines Drehfeldes wenigstens zwei phasenverschobene Spannungen. Hierzu weist der Asynchronmotor üblicherweise eine Hauptwicklung und eine um 90° versetzte Hilfswicklung auf, wobei die Phasenverschiebung mit einem mit der Hilfswicklung in Reihe geschalteten Kondensator realisiert wird.

Die Phasenverschiebung ist eine Funktion der Kapazität des Kondensators und der Drehzahl des Asynchronmotors und bestimmt dessen Arbeitspunkt. Ein Betrieb am falschen Arbeitspunkt kann zu Betriebsstörungen, Beschädigungen an den Bauteilen und der zugeordneten Maschine führen. Es ist daher oft notwendig, eine Veränderung der Kapazität des Kondensators in der Startphase des Motors zwischen Anlauf und Nenndrehzahl vorzunehmen, wobei die Veränderung der Kapazität in der Regel wie folgt realisiert wird:

1. Der Asynchronmotor wird mit einem Anlaufkondensator und einem Betriebskondensator betrieben, wobei der Anlaufkondensator nach dem Startvorgang getrennt wird, oder

2. der Asynchronmotor wird nur mit einem Anlaufkondensator betrieben, der nach dem Startvorgang getrennt wird.

Für einen störungsfreien Motorbetrieb muss das verfügbare Drehmoment sowohl vor als auch unmittelbar nach der Trennung des Anlaufkondensators deutlich größer als das Lastmoment bleiben. In der Praxis ist es üblich, die Trennung des Anlaufkondensators mit einem von der Motordrehzahl abhängigen Fliehkraftschalter, mit einem von Motorstrom abhängigen Stromrelais oder nach einer vordefinierten Zeit zu bewirken.

Weiterhin ist aus der US 2007/0057647 A1 ein Verfahren bekannt, bei dem die Phasenverschiebung zwischen der Spannung der Hilfswicklung und der Spannung der Hauptwicklung ermittelt wird und der Anlaufkondensator getrennt wird, wenn die Phasenverschiebung einen vorgegebene Wert überschreitet.

Aus der DE 600 24 487 T2 ist ferner ein Motorschaltkreis für einen Einphasen-Wechselstrom-Induktionsmotor mit Hauptwicklung, Hilfswicklung und Anlaufkondensator bekannt, wobei die Spannung der Hilfswicklung gemessen wird und die Trennung des Anlaufkondensators dann eingeleitet wird, wenn die erste Ableitungsfunktion der gemessenen Spannung einen vorgegebenen Schwellenwert überschreitet.

Ein weiteres Verfahren zur Abtrennung eines Anlaufkondensators eines Asynchronmotors mit einer Hauptwicklung und einer Hilfswicklung wird in der DE 10 2004 012 635 A1 beschrieben, wobei die Spannung der Hilfswicklung gemessen und mit einem Vorgabewert verglichen wird. Alternativ oder zusätzlich kann auch die Spannungsänderungsgeschwindigkeit mit einem Vorgabewert verglichen werden.

Auch in der EP 1 671 415 B1 wird ein Motor mit einer Hauptwicklung und einer zu- und abschaltbaren Hilfswicklung sowie einem zwischen der Spannungsquelle und den Wicklungen angeordneten Stromsensor offenbart. Die Abschaltung der Hilfswicklung erfolgt dann, wenn das Verhältnis des aktuell gemessenen Stromes zum Anfangsstromwert einen vorgegebenen Wert erreicht bzw. unterschreitet.

Die EP 2 287 494 A2 beschreibt eine Schutzeinrichtung für elektrische Motoren, bei der die Wicklungstemperatur des Motors mittels einer Sensorschaltung mit wenigstens zwei PTC-Sensoren mit unterschiedlichen Nennansprechtemperaturen ermittelt wird. Die Sensorschaltung liefert dabei ein Sensorsignal, das von einer Auswertungseinrichtung ausgewertet wird, die Mittel zur Ermittlung der Ableitung erster und/oder zweiter Ordnung des zeitabhängigen Sensorsignals umfasst.

Der vorliegenden Erfindung liegt die Aufgabe zugrunde, einen störungsfreien und bauteilschonenden Betrieb des Asynchronmotors mit einem vereinfachten Schaltungs- und Verarbeitungsaufwand zu gewährleisten.

Erfindungsgemäß wird diese Aufgabe durch die Merkmale der Ansprüche 1 und 12 gelöst.

Beim erfindungsgemäßen Verfahren zum Betreiben eines Asynchronmotors mit einer Hauptwicklung und einer Hilfswicklung wird ein Anlaufkondensator vor dem Anlauf des Asynchronmotors in Reihe zur Hilfswicklung geschaltet, der zu einem zu ermittelnden Zeitpunkt nach dem Anlauf des Asynchronmotors getrennt wird, indem

- die Spannung der Hilfswicklung gemessen wird,

- wenigstens ein mathematisches Modell verwendet wird, das die Spannungsamplitude der Spannung der Hilfswicklung gegenüber der Zeit abbildet und wenigstens eine Kenngröße des dynamischen Prozesses des Motorstartvorgangs beinhaltet, wobei die Kenngröße des dynamischen Prozesses des Motorstartvorgangs anhand des mathematischen Modells und des Verlaufs der Amplitude oder des Effektivwertes der gemessenen Spannung der Hilfswicklung ermittelt wird und

- der Zeitpunkt zur Trennung des Anlaufkondensators mit Hilfe der ermittelten Kenngröße bestimmt wird.

Der erfindungsgemäße Asynchronmotor weist eine Hauptwicklung, eine Hilfswicklung, einen Anlaufkondensator und eine Steuer- und Regeleinrichtung auf, wobei die Steuer- und Regeleinrichtung mit einer Spannungsmesseinrichtung zur Ermittlung des Verlaufs der Amplitude oder des Effektivwertes der gemessenen Spannung der Hilfswicklung und einer Trenneinrichtung zur Trennung des Anlaufkondensators in Verbindung steht, wobei die Steuer- und Regeleinrichtung zur Ermittlung des Zeitpunkts zur Trennung des Anlaufkondensators so ausgebildet ist, dass

- die Spannung der Hilfswicklung gemessen wird,

- wenigstens ein mathematisches Modell verwendet wird, das die Spannungsamplitude der Spannung der Hilfswicklung gegenüber der Zeit abbildet und wenigstens eine Kenngröße des dynamischen Prozesses des Motorstartvorgangs beinhaltet, wobei die Kenngröße des dynamischen Prozesses des Motorstartvorgangs anhand des mathematischen Modells und des Verlaufs der Amplitude oder des Effektivwertes der gemessenen Spannung der Hilfswicklung ermittelt wird und

- der Zeitpunkt zur Trennung des Anlaufkondensators mit Hilfe der ermittelten Kenngröße bestimmt wird.

Dadurch, dass lediglich die Spannung der Hilfswicklung gemessen und verarbeitet wird, vereinfacht sich der Schaltungs- und Verarbeitungsaufwand. Dennoch kann ein optimaler Zeitpunkt zur Trennung des Anlaufkondensators ermittelt werden, sodass ein störungsfreier Betrieb des Asynchronmotors gewährleistet ist und mögliche Beschädigungen am Asynchronmotor und der zugeordneten Anlage vermieden werden. Durch die Verwendung wenigstens eines mathematischen Modells, das die Spannungsamplitude der Spannung der Hilfswicklung gegenüber der Zeit abbildet, kann der Zeitpunkt zur Trennung des Anlaufkondensators störungsfreier und bauteilschonender ermittelt werden.
Weitere Ausgestaltungen der Erfindung sind Gegenstand der Unteransprüche.
Die Kenngröße wird vorzugsweise mit der ersten und/oder einer weiteren Ableitungsfunktionen ($d^n U_H / dt^n$) des Verlaufs der Amplitude oder des Effektivwertes der gemessenen Spannung der Hilfswicklung ermittelt.
Gemäß einem bevorzugten Ausführungsbeispiel wird zur Bestimmung des Zeitpunkts zur Trennung des Anlaufkondensators die erste und zweite Ableitungsfunktion ($dU_H / dt$, $d^2 U_H / dt^2$) des Verlaufs der Amplitude oder des Effektivwertes der gemessenen Spannung der Hilfswicklung ermittelt und berücksichtigt.
Weiterhin kann zur Bestimmung des Zeitpunkts zur Trennung des Anlaufkondensators die erste und zweite Ableitungsfunktion ($dU_H / dt$, $d^2 U_H / dt^2$) des Verlaufs der Amplitude oder des Effektivwertes der gemessenen Spannung der Hilfswicklung ermittelt und berücksichtigt werden.
Gemäß einer weiteren Variante der Erfindung werden zur Bestimmung des Zeitpunkts zur Trennung des Anlaufkondensators die erste, zweite und dritte Ableitungsfunktion ($dU_H / dt$, $d^2 U_H / dt^2$, $d^3 U_H / dt^3$) des Verlaufs der Amplitude oder des Effektivwertes der gemessenen Spannung der Hilfswicklung ermittelt und berücksichtigt.
Das zur Ermittlung des Zeitpunkts zur Trennung des Anlaufkondensators zur Anwendung kommende wenigstens eine mathematische Modell wird durch das folgende erste mathematische Modell gebildet:

$$U_H = U_{H\infty} - (U_{H\infty} - U_{H0})e^{-t/\tau}$$

wobei $U_{H0}$ der Anfangswert der Hilfspannung ($U_H$) bei t=0, $U_{H\infty}$ der Endwert der Hilfsspannung ($U_H$) bei t=oo sind. Die Zeitkonstante $\tau$ stellt die Kenngröße des dynamischen Prozesses des Motorstartvorgangs dar.
Alternativ oder zusätzlich zum ersten mathematischen Modell findet auch das folgende zweite mathematische Modell Anwendung:

$$U_H = \sum_{i=0}^{n} a_i t^i \, ,$$

wobei n > 2, $U_{H0}$ der Anfangswert der Hilfspannung ($U_H$) bei t=0, $U_{H\infty}$ der Endwert der Hilfsspannung ($U_H$) bei t=oo und $a_i$ Konstanten sind.
Dabei kann zur Bestimmung des Zeitpunkts zur Trennung des Anlaufkondensators die Zeitkonstante $\tau$ des ersten mathematischen Modells mit Hilfe der ersten und der zweiten Ableitungsfunktion ($dU_H / dt$, $d^2 U_H / dt^2$) des Verlaufs der Amplitude oder des Effektivwertes der gemessenen Spannung der Hilfswicklung ermittelt und verwendet werden.
Bei Verwendung des zweiten mathematischen Modells kann zumindest ein Wendepunkt des zweiten mathematischen Modells, welcher die Kenngröße des dynamischen Prozesses des Motorstartvorgangs darstellt, mit Hilfe der ersten und der zweiten Ableitungsfunktion ($dU_H / dt$, $d^2 U_H / dt^2$) des Verlaufs der Amplitude oder des Effektivwertes der gemessenen Spannung der Hilfswicklung (2) ermittelt und verwendet werden. Hierbei kann der Wendepunkt des Verlaufs der Amplitude oder des Effektivwertes der gemessenen Spannung der Hilfswicklung mit Hilfe des Maximums der ersten Ableitungsfunktion ($dU_H/dt$) des Verlaufs der Amplitude oder des Effektivwertes der gemessenen Spannung der Hilfswicklung oder mit Hilfe des negativen Nulldurchgangs der zweiten Ableitungsfunktion ($d^2U_H/dt^2$) des Verlaufs der Amplitude oder des Effektivwertes der gemessenen Spannung der Hilfswicklung ermittelt werden. Weiterhin kann zur Bestimmung des Zeitpunkts zur Trennung des Anlaufkondensators ein Knickpunkt des Verlaufs der Amplitude oder des Effektivwertes der gemessenen Spannung der Hilfswicklung herangezogen werden. Hierbei kann der Knickpunkt des Verlaufs der Amplitude oder des Effektivwertes der gemessenen Spannung der Hilfswicklung mit Hilfe des Minimums der zweiten Ableitungsfunktion ($d^2U_H/dt^2$) des Verlaufs der Amplitude oder des Effektivwertes der gemessenen Spannung der Hilfswicklung oder mit Hilfe des positiven Nulldurchgangs der dritten Ableitungsfunktion ($d^3U_H/dt^3$) des Verlaufs der Amplitude oder des Effektivwertes der gemessenen Spannung der Hilfswicklung ermittelt werden.

Als weiteres Kriterium zur Trennung des Anlaufkondensators kann eine Überschreitung oder Unterschreitung eines vordefinierten Schwellwertes der Ableitungsfunktion n-ter Ordnung ($d^nU_H/dt^n$) des Verlaufs der Amplitude oder des Effektivwertes der gemessenen Spannung der Hilfswicklung verwendet werden.

Optional kann zur Feststellung von kritischen Motorzuständen die erste Ableitungsfunktion ($dU_H/dt$) des Verlaufs der Amplitude oder des Effektivwertes der gemessenen Spannung der Hilfswicklung verwendet werden, wobei ein kritischer Motorzustand dann erreicht ist, wenn

- die erste Ableitungsfunktion ($dU_H/dt$) des Verlaufs der Amplitude oder des Effektivwertes der gemessenen Spannung der Hilfswicklung in einem vordefinierten Zeitraum ab Start des Asynchronmotors eine vordefinierte Schwelle nicht überschritten hat, und/oder

- die erste Ableitungsfunktion ($dU_H/dt$) des Verlaufs der Amplitude oder des Effektivwertes der gemessenen Spannung der Hilfswicklung für einen vordefinierten Zeitraum < 0 bleibt.

Weiterhin ist es möglich, mit Hilfe der zeitlichen Veränderung des Anfangswertes des Verlaufs der Amplitude oder des Effektivwertes der gemessenen Spannung der Hilfswicklung eine Kapazitätsänderung seit Inbetriebnahme des Anlaufkondensators und die verbleibende Lebensdauer des Anlaufkondensators zu ermitteln.

Ferner ist es möglich, mit Hilfe der zeitlichen Veränderung des Endwertes des Verlaufs der Amplitude oder des Effektivwertes der gemessenen Spannung der Hilfswicklung eine Kapazitätsänderung seit Inbetriebnahme des Betriebskondensators und die verbleibende Lebensdauer des Betriebskondensators zu ermitteln.

Bei der praktischen Umsetzung der Erfindung kann die Ableitungsfunktion ($dU_H/dt$) als Wertänderung über eine vordefinierte Zeitspanne ($U_{H2} - U_{H1})/(t_2 - t_1)$ verwendet werden.

Die Steuer- und Regeleinrichtung des Asynchronmotors ist vorzugsweise so ausgebildet, dass sie Mittel zur Ermittlung der ersten und/oder weiteren Ableitungsfunktionen ($d^nU_H/dt^n$) des Verlaufs der Amplitude oder des Effektivwertes der gemessenen Spannung der Hilfswicklung sowie Mittel zur Ermittlung des Zeitpunkts zur Trennung des Anlaufkondensators in Abhängigkeit der ersten und/oder weiteren Ableitungsfunktionen ($d^nU_H/dt^n$) des Verlaufs der Amplitude oder des Effektivwertes der gemessenen Spannung der Hilfswicklung umfasst. Die Trenneinrichtung zur Trennung des Anlaufkondensators wird vorzugsweise durch ein Relais vom Typ Schließer gebildet.

Weitere Ausgestaltungen der Erfindung werden anhand der nachfolgenden Beschreibung und der Zeichnung näher erläutert.

In der Zeichnung zeigen

Fig. 1    Anschlussschema eines Asynchronmotors mit Betriebskondensator und Anlaufkondensator,

Fig. 2    Darstellung des Drehmoments gegenüber der Drehzahl für den Asynchronmotor gemäß Fig. 1,

Fig. 3    Anschlussschema eines Asynchronmotors und Anlaufkondensator und ohne Betriebskondensator,

Fig. 4    Darstellung des Drehmoments gegenüber der Drehzahl für den Asynchronmotor gemäß Fig. 3,

Fig. 5    Darstellung der Spannungsamplitude der Hilfswicklung gegenüber der Drehzahl und Darstellung der Drehzahl gegenüber der Zeit,

Fig. 6    Darstellung der Spannungsamplitude der Hilfswicklung gegenüber der Zeit gemäß Fig. 5,

Fig. 7    Darstellung der ersten, zweiten und dritten Ableitung der Spannungsamplitude der Hilfswicklung,

Fig. 8    Darstellung der Veränderungen des Spannungsverlaufs der Hilfswicklung infolge von Kapazitätsänderungen.

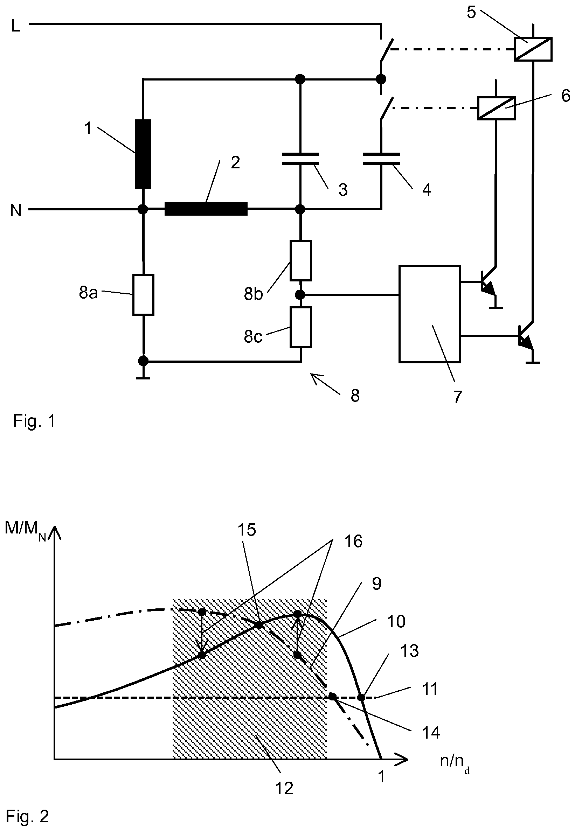

Der im Anschlussschema gemäß Fig. 1 dargestllte Asynchronmotor weist eine Hauptwicklung 1, eine um 90° räumlich versetzte Hilfswicklung 2 sowie zwei Kondensatoren, nämlich einen Betriebskondensator 3 und einen Anlaufkondensator 4, auf. Weiterhin ist eine erste Trenneinrichtung 5 zum Ein- und Ausschalten des Asynchronmotors vorgesehen. Sie ist vorzugsweise als Relais vom Typ Schließer (NO) ausgebildet und dient zur Vermeidung einer nicht planmäßigen Einschaltung des Asynchronmotors, die beispielsweise bei einem Netzausfall auftreten könnte. Dadurch werden die eingesetzten Kondensatoren und Trenneinrichtungen vor Beschädigungen durch erhöhte Einschaltströme, die durch nicht entladene Kondensatoren entstehen könnten, geschützt. Des Weiteren ist eine zweite Trenneinrichtung 6 zum Zuschalten bzw. Trennen des Anlaufkondensators 4 vorgesehen. Auch die zweite Trenneinrichtung 6 ist vorzugsweise als Relais vom Typ Schließer (NO) ausgebildet und vermeidet auch eine nicht planmäßige Einschaltung des Motors. Die Ansteuerung der beiden Trenneinrichtungen 5, 6 erfolgt über eine Steuer- und Regeleinrichtung 7 die mit einer Spannungsmesseinrichtung 8 in Verbindung steht, die durch ein Netzwerk aus hochohmigen Widerständen 8a, 8b, 8c gebildet wird und zur Ermittlung des Verlaufs der Amplitude oder des Effektivwertes der gemessenen Spannung der Hilfswicklung dient.

In Fig. 2 sind die Kennlinien für das normierte Drehmoment (bezogen auf das Nenndrehmoment $M_N$) gegenüber der normierten Drehzahl (bezogen auf die synchrone Drehzahl $n_d$) aufgetragen, wobei mit dem Bezugszeichen 9 die Kennlinie mit eingeschaltetem Betriebs- und Anlaufkondensator und mit dem Bezugszeichen 10 die Kennlinie mit Betriebskondensator und abgetrenntem Anlaufkondensator gekennzeichnet sind. Das Lastmoment wird zur einfacheren Darstellung als konstant angenommen und ist mit dem Bezugszeichen 11 versehen. Für einen störungsfreien Motorbetrieb ist Voraussetzung, dass das verfügbare Drehmoment sowohl vor als auch unmittelbar nach der Trennung des Anlaufkondensators 4 deutlich größer als das Lastmoment 11 bleibt. In Fig. 2 ist der Drehzahlbereich, in dem diese Voraussetzung für die Trennung des Anlaufkondensators erfüllt ist, als schraffierter Effektivtrennbereich 12 dargestellt. Des Weiteren ist mit dem Bezugszeichen 13 der Motorarbeitspunkt mit Betriebskondensator und mit 14 der Arbeitspunkt mit Anlaufkondensator dargestellt.

Der optimale Zeitpunkt für die Trennung des Anlaufkondensators 4 ist der Schnittpunkt 15 der beiden Kennlinien 9 und 10. In der Praxis ist das Lastmoment 11 in der Regel von der Drehzahl und der Belastung abhängig, die beide wiederum auch variieren können. Darüber hinaus verändert sich die Kapazität der meisten für Asynchronmotoren eingesetzten Kondensatoren mit den Einsatzbedingungen und der Zeit. Eine Veränderung der Kapazität führt zwangsläufig auch zur Veränderung der Kennlinien 9 und 10, und somit auch zur Veränderung des optimalen Zeitpunkts 15 zur Trennung des Anlaufkondensators. Üblicherweise wird es daher bei der Trennung des Anlaufkondensators zu Drehmomentänderungen kommen, die in Fig. 2 mit den Pfeilen 16 dargestellt sind. Solange diese Änderungen im Effektivtrennbereich 12 erfolgen ist dies unproblematisch. Außerhalb dieses Bereichs kann es jedoch zu Betriebsstörungen und gar zum Stillstand des Motors kommen.

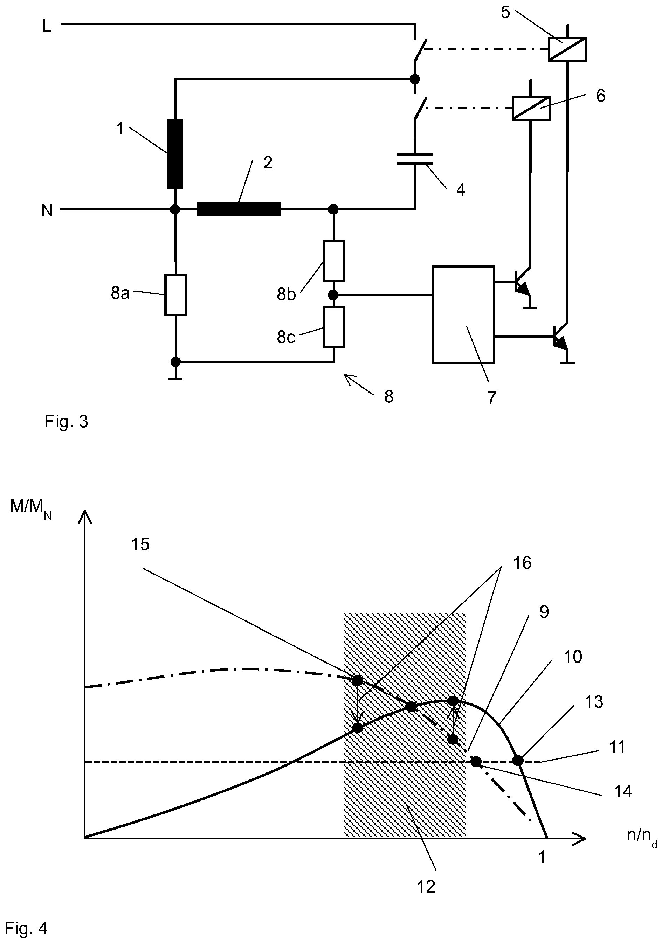

In Figur 3 ist das Anschlussbild eines Asynchronmotors mit Steuer- und Regeleinrichtung gemäß einem zweiten Ausführungsbeispiel dargestellt, dass sich gegenüber dem ersten Ausführungsbeispiel nur dadurch unterscheidet, dass kein Betriebskondensator 3 vorhanden ist. Es wurden daher auch für gleiche Bauteile und die entsprechenden Kennlinien in Fig. 4 dieselben Bezugszeichen verwenden. Man erkennt auch, dass für das Ausführungsbeispiel gemäß Fig. 3 der Effektivtrennbereich 12 deutlich schmäler ausgebildet ist. Für diesen Anwendungsfall ist es daher noch wichtiger, den optimalen Zeitpunkt zur Trennung des Anlaufkondensators zu finden.

Im Folgenden werden zwei Ausführungsbeispiele zur Ermittlung des optimalen Zeitpunkts zur Trennung des Anlaufkondensators näher erläutert.

Der Startvorgang eines Asynchronmotors ist ein dynamischer Prozess, der innerhalb einer begrenzten Zeit in einen stabilen Endbetriebszustand übergeht. Während des Startvorgangs ist die Spannungsamplitude $U_H$ der Hilfswicklung, die Spannungsamplitude $V_C$ am Kondensator, die Stromamplitude $I_H$ der Hilfswicklung, die Stromamplitude $I_C$ in einzelnen Kondensator sowie die Phasenverschiebungen zwischen den Spannungen der Haupt- und Hilfswicklung und zwischen den Strömen jeweils eine Funktion der Zeit. Jede dieser Funktionen spiegelt den Verlauf des dynamischen Prozesses wider. Im nachfolgenden Ausführungsbeispiel wird die Spannungsamplitude $U_H$ der Hilfswicklung betrachtet.

Es wird zuerst ein mathematisches Modell zur praxisnahen Beschreibung bzw. Simulierung der Spannung $U_H$ (Amplitude oder Effektivwert) der Hilfswicklung für den Startvorgang eines Asynchronmotors gebildet. Das mathematische Modell bildet die Grundlage für das Verfahren zur Steuerung des Startvorgangs eines Asynchronmotors.

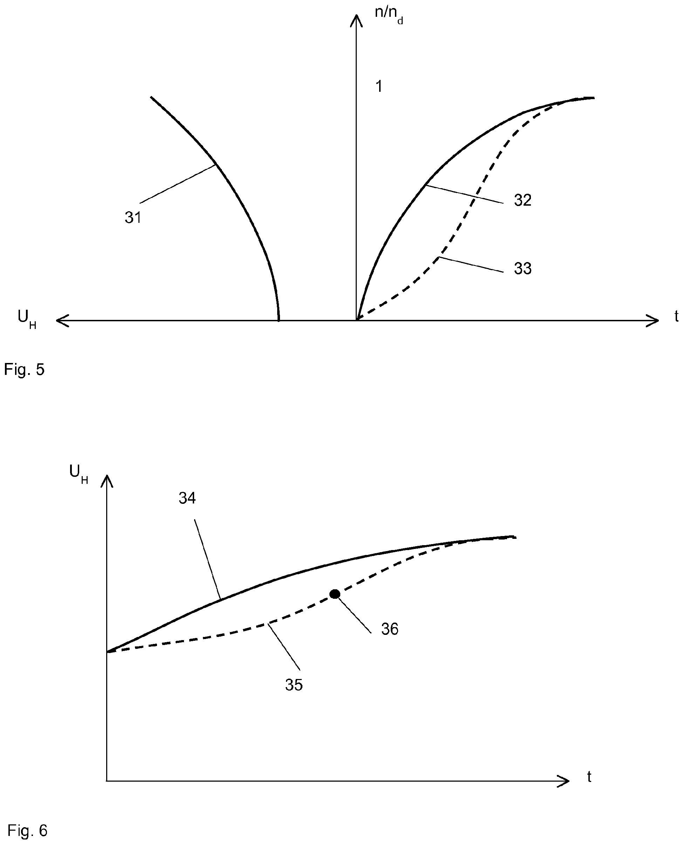

Aus den Grundlagen von Asynchronmotoren lässt sich die Kennlinie 31 der Spannungsamplitude der Hilfswicklung $U_H$ gegenüber der Drehzahl $n/n_d$ auf der linken Seite der Darstellung in Fig. 5 und der Verlauf der Drehzahl $n/n_d$ gegenüber der Zeit t auf der rechten Seite der Fig. 5 prinzipiell darstellen. Beim Verlauf der Drehzahl $n/n_d$ gegenüber der Zeit t wird von zwei möglichen Verläufen 32, 33 ausgegangen. Entsprechend ergeben sich bei der Darstellung der Spannungsamplitude der Hilfswicklung $U_H$ gegenüber der Zeit t gemäß Fig. 6 ebenfalls zwei Kurven 34, 35.

Unter Berücksichtigung der Eigenschaften eines Asynchronwechselstrommotors und der Anwendung von linearen Kondensatoren besitzt der Verlauf von $U_H$ folgende Eigenschaften:

- Mit der Zeit eindeutig steigend

- stetig und differenzierbar

- die Ableitung zweiter Ordnung $d^2U_H/dt^2$ ist eine mit der Zeit variierende stetige Funktion, d.h. keine Konstante.

Ausgehend von diesen Eigenschaften kann man die beiden Kurven 34 bzw. 35 in Fig.6 jeweils mit den folgenden mathematischen Modellen bzw. Funktion annähend beschreiben:

$$U_H = U_{H\infty} - (U_{H\infty} - U_{H0})e^{-t/\tau} \qquad (1)$$

bzw.

$$U_H = \sum_{i=0}^{n} a_i t^i, \qquad n > 2 \qquad (2)$$

wobei $U_{H0}$ der Anfangswert von $U_H$ bei t=0, $U_{H\infty}$ der Endwert von $U_H$ bei t=oo (unendlich) und $a_i$ Konstanten sind. $\tau$ ist die Zeitkonstante des ersten mathematischen Modells (1) und eine Kenngröße des dynamischen Prozesses des Motorstartvorgangs.

Das erste mathematische Modell (1) ist eine exponentielle Funktion und weist keinen Wendepunkt auf, da ihre Ableitung zweiter Ordnung nie gleich Null wird. Mit dem zweiten mathematischen Modell (2) können alle sonstigen Zeitverläufe von $U_H$, die nicht ausreichend durch das erste mathematische Modell angenäht sind, beschrieben werden. Das zweite mathematische Modell (2) weist mindestens einen Wendepunkt 36 auf. Eines der beiden Modelle kann aber schon genügen, wenn der Verlauf von $U_H$, bzw. der dynamische Prozess des Motors dadurch ausreichend beschrieben wird.

Da die Spannungsamplitude der Hilfswicklung $U_H$ den dynamischen Prozess beschreibt, kann man das Erreichen einer vordefinierten relativen Veränderung von $U_H$, beispielsweise 80%, als geeigneter Zeitpunkt zur Trennung des Anlaufkondensators herangezogen werden. Den Trennzeitpunkt erhält man dann durch Lösung der Gleichung (1) bzw. (2).

Dabei ergibt sich nach Gleichung (1) bei einer vordefinierten relativen Veränderung P folgende Lösung:

$$t = -\tau \bullet \ln \frac{U_{H\infty} - U_H}{U_{H\infty} - U_{H0}} = -\tau \bullet \ln(1 - P) \qquad (3)$$

wobei

$$P = \frac{U_H - U_{H0}}{U_{H\infty} - U_{H0}}$$

die relative Veränderung von $U_H$ ist. Bei einer vordefinierten relativen Veränderung von P = 80% erhält man den Trennzeitpunkt:

$$t = -\tau \ln(1 - 0,8) \approx 1,6\tau$$

Bei einer vordefinierten relativen Veränderung von P=63,2% wäre der Trennzeitpunkt genau $\tau$.

Die Zeitkonstante $\tau$ ist eine Kenngröße des Motorstartvorgangs und es besteht eine Abhängigkeit von Bauteil- bzw. Betriebsparametern, wie z.B. Kenndaten des Motors, Kapazitäten der Kondensatoren, Versorgungsspannung, Lastmoment und sonstigen Betriebsbedingungen, die vor der Inbetriebnahme oft nicht bekannt sind und sich danach mit der Zeit verändern können. Dies hat zufolge, dass eine Ermittlung der Zeitkonstante $\tau$ in Abhängigkeit von Bauteil- bzw. Betriebsparametern kompliziert und auch nicht sinnvoll ist.

Erfindungsgemäß wird daher ein Algorithmus zur Ermittlung der Zeitkonstante $\tau$ direkt aus dem Verlauf von

$U_H$ ohne Kenntnis der einzelnen Bauteil- bzw. Betriebsparameter hergeleitet. Dazu werden die Ableitungsfunktionen von $U_H$ gebildet:

$$\frac{dU_H}{dt} = \frac{1}{\tau}(U_{H\infty} - U_{H0})e^{-t/\tau} \tag{4}$$

und

$$\frac{d^2U_H}{dt^2} = -\frac{1}{\tau^2}(U_{H\infty} - U_{H0})e^{-t/\tau} \tag{5}$$

Die gesuchte Zeitkonstante $\tau$ für das erste mathematische Modell (1) erhält man dann aus (4) und (5):

$$\tau = -\left(\frac{dU_H}{dt} / \frac{d^2U_H}{dt^2}\right) \tag{6a}$$

bzw. aus (1) und (4) durch Differenzbildung über zwei beliebige Zeitpunkte:

$$\tau = -\Delta U_H / \Delta \frac{dU_H}{dt} \tag{6b}$$

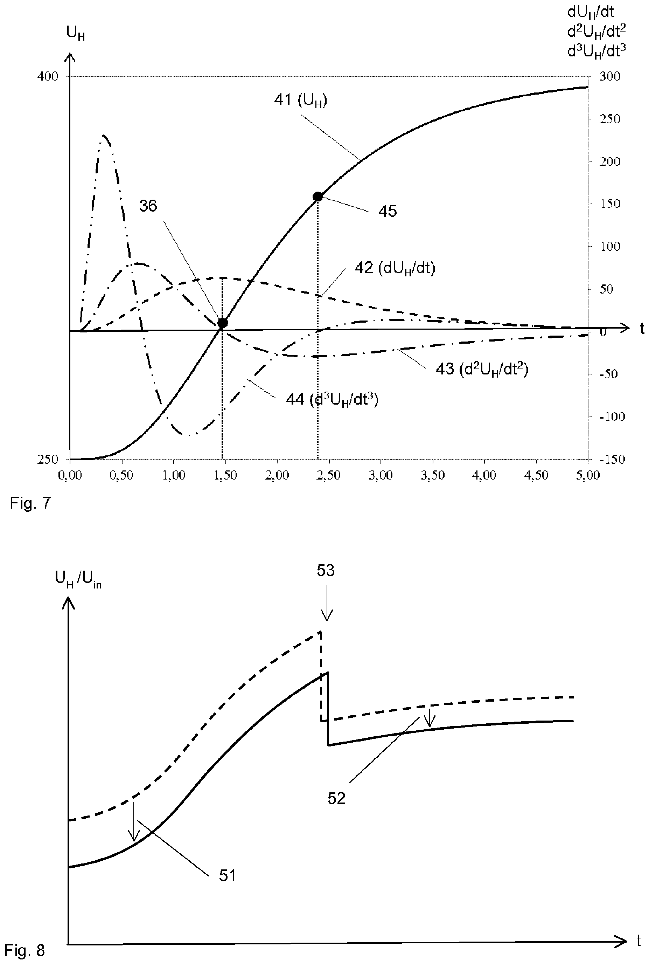

Für die Ermittlung des Trennzeitpunktes nach dem zweiten mathematischen Modell (2) wird auf die Fig.7 Bezug genommen. Dort wird der Verlauf 41 der Spannungsamplitude $U_H$ der Hilfswicklung nach Funktion (2), ihre erste Ableitung 42 ($dU_H/dt$), ihre zweite Ableitung 43 ($d^2U_H/dt^2$) und ihre dritte Ableitung 44 ($d^3U_H/dt^3$) dargestellt. Die erste Ableitung 42 ($dU_H/dt$) und die zweite Ableitung 42 ($d^2U_H/dt^2$) beschreiben jeweils die Steigung (Veränderung) und die Krümmung ihrer Stammfunktion $U_H$.

Der negative Nulldurchgang der zweiten Ableitung 43 ($d^2U_H/dt^2$) markiert den Wendepunkt 36 der des Verlaufs 41 der Spannungsamplitude $U_H$ mit ihrer Anstiegstendenz, d.h. der Anstieg des Verlaufs 41 der Spannungsamplitude $U_H$ setzt sich zwar fort, wird aber ab diesem Zeitpunkt langsamer. Der negative Wertbereich der zweiten Ableitung 43 ($d^2U_H/dt^2$) nach dem Wendepunkt 36 beschreibt die Fortsetzung des mit der Zeit immer langsamer werdenden Wertanstiegs des Verlaufs 41 der Spannungsamplitude $U_H$. Am positiven Nulldurchgang der dritten Ableitung 44 ($d^3U_H/dt^3$) nach dem Wendepunkt 36 hat die erste Ableitung 42 ($dU_H/dt$) (der Wertanstieg von $U_H$) seinen Wendepunkt erreicht, der dem Knickpunkt 45 an der Stammfunktion $U_H$ entspricht. Sowohl der Wendepunkt 36 als auch der Knickpunkt 45 sind Kenngrößen, die den Fortschritt des dynamischen Prozesses beschreiben. Die Zeit $t_{Wendepunkt}$ am Wendepunkt 36, die Zeit $t_{Knickpunkt}$ am Knickpunkt 45 oder die Zeit als Funktion der beiden Zeitpunkte:

$$t = A \bullet t_{Wendepunkt} + B \bullet t_{Knickpunkt} + C \tag{7}$$

kann somit als Zeitpunkt zur Trennung des Anlaufkondensators definiert werden. Hierbei sind A, B und C beliebig vordefinierte Konstanten.

Die Ermittlung des Zeitpunkts zur Trennung des Anlaufkondensators gemäß den oben aufgezeigten Möglichkeiten hat folgende Vorteile:

• Es wird nur die Spannungsamplitude der Hilfswicklung $U_H$ erfasst. Die Erfassung von weiteren Größen, wie beispielsweise die Spannung der Hauptwicklung, ist nicht nötig.

• Die Zeitkonstante $\tau$ nach dem ersten mathematischen Modell gemäß Gleichung (1) bzw. der Wendepunkt 36 und der Knickpunkt 45 nach dem zweiten mathematischen Modell gemäß Gleichung (2) sind Kenngrößen des Spannungsverlaufs $U_H$ der Hilfswicklung und somit auch Kenngrößen des dynamischen Prozesses des Motorbetriebs. Jede Änderung an Bauteil- bzw. Betriebsparametern, wie z. B. den Kenndaten des Motors, Kapazitäten der Kondensatoren, Versorgungsspannung, Lastmoment und sonstigen Betriebsbedingungen, schlägt sich in die Kenngrößen nieder. Das heißt, der so ermittelte Zeitpunkt zur Trennung des Anlaufkondensators gleicht solche Änderungen automatisch aus, was bei Trennungskriterien mit festen Grenzwerten von Zeit, Strom, Spannung oder Phasenverschiebung, wie sie im Stand der Technik verwendet werden, nicht möglich ist.

- Es ergeben sich ein optimaler Startvorgang und ein optimaler Betrieb des Motors, auch unter Berücksichtigung der sich mit der Zeit ändernden Bauteil- bzw. Betriebsparameter, wie z. B. der Kapazität des Kondensators oder der aktuellen Belastung des Motors. Diese Optimierung trägt auch zur Erhöhung der Lebensdauer der Kondensatoren, des Motors und der Anlage bei.

- Mögliche Beschädigungen an den Kondensatoren, den Trenneinrichtungen, am Motor und an der Anlage werden vermieden.

Die Kapazität der in der Praxis oft eingesetzten Kondensatoren unterliegt starken Fertigungstoleranzen und zeitlichen Veränderungen. In Fig. 8 zeigt der Pfeil 51 die Veränderung des Spannungsverlaufs der Hilfswicklung infolge einer Kapazitätsveränderung des Anlaufkondensators vor Abtrennung der Anlaufkondensatoren. Der Pfeil 52 zeigt die Veränderung des Spannungsverlaufs der Hilfswicklung infolge einer Kapazitätsveränderung des Betriebskondensators nach Abtrennung der Anlaufkondensatoren. Der Pfeil 53 zeigt die Veränderungen des Spannungsverlaufs der Hilfswicklung infolge der Abtrennung des Anlaufkondensators. Mit den hier vorgestellten Verfahren wird eine automatische Anpassung im Trennzeitpunkt des Anlaufkondensators erreicht.

Des Weiteren besteht die Möglichkeit einer Zustandsüberprüfung (beispielsweise die Kapazitätsänderung seit erstmaliger Inbetriebnahme) bzw. einer Berechnung der verbleibenden Lebensdauer der eingesetzten Kondensatoren und somit einer rechtzeitigen Serviceanzeige von bevorstehenden Wechseln der Kondensatoren. Hierfür kann man beispielsweise folgende Kriterien festlegen:

$$\Delta C_{Anlauf} = f(\frac{\Delta U_{H0} / U_{in}}{\Delta t}) \tag{8}$$

und

$$\Delta C_{Betrieb} = f(\frac{\Delta U_{H\infty} / U_{in}}{\Delta t}) \tag{9}$$

wobei

$\Delta C$:    Kapazitätsänderung des Kondensators,

$U_{in}$:    Versorgungsspannung des Motors,

$U_{H0}$:    Anfangswert von $U_H$ bei t=0,

$U_{H\infty}$:    Endwert von $U_H$ bei t=∞,

$\Delta U_{H0}/U_{in}$:    die relative Veränderung des Anfangswertes $U_{H0}$ zur Versorgungsspannung $U_{in}$,

$\Delta U_{H\infty}/U_{in}$:    die relative Veränderung des Endwertes $U_{H\infty}$ zur Versorgungsspannung $U_{in}$,

$\frac{\Delta U_{H0}/U_{in}}{\Delta t}$ :    die zeitliche relative Veränderung des Anfangswertes $U_{H0}$ und

$\frac{\Delta U_{H\infty}/U_{in}}{\Delta t}$ :    die zeitliche relative Veränderung des Endwertes $U_{H\infty}$ sind.

Die relative Veränderung zur Versorgungsspannung $U_{in}$ wird hier dazu verwendet, um die von der Versorgungsspannung $U_{in}$ abhängige Veränderung auszugleichen.

Außerdem lassen sich mit Hilfe der gemessenen Spannung der Hilfswicklung kritische Motorzustände, wie z. B. ein blockierter Läufer oder ein unmittelbar bevorstehender Motorstillstand, erkennen.

Das Kriterium zur Erkennung eines blockierten Läufers beim Motorstart könnte wie folgt lauten:

$dU_H/dt$ < vordefinierte Schwelle für einen vordefinierten Zeitraum ab Motorstart (10)

Das Kriterium zur Erkennung eines unmittelbar bevorstehenden Motorstillstandes könnte wie folgt lauten:

$$dU_H/dt < 0 \text{ für einen vordefinierten Zeitraum} \tag{11}$$

Ein effektiver Schutz von eingesetzten Kondensatoren und Trenneinrichtungen vor Beschädigung durch überhöhte Einschaltströme, die durch nicht ausreichend entladene Kondensatoren entstehen, kann durch Verhindern eines planmäßigen Neustarts (über Lastanforderung) oder eines nicht planmäßigen Neustarts (beispielsweise wegen eines Stromausfalls) gewährleistet werden, wenn nach jeder Motorabschaltung eine Verzögerungszeit gemäß

$$t = D \bullet \tau \tag{12}$$

und/oder

$$t = E \bullet Wendepunkt \tag{13}$$

eingehalten wird, wobei D und E vordefinierte Konstanten sind. Der Schutz ist besonders effektiv, da die Verzögerungszeit automatisch durch die Formeln (12) und (13) an die aktuellen Bauteil- bzw. Betriebsparameter angepasst wird.

**Patentansprüche**

1.  Verfahren zum Betreiben eines Asynchronmotors mit einer Hauptwicklung (1) und einer Hilfswicklung (2), wobei ein Anlaufkondensator (4) vor dem Anlauf des Asynchronmotors in Reihe zur Hilfswicklung (2) geschaltet ist, der zu einem zu ermittelnden Zeitpunkt nach dem Anlauf des Asynchronmotors getrennt wird, indem die Spannung der Hilfswicklung (2) gemessen wird, wobei

    - wenigstens ein mathematisches Modell verwendet wird, das die Spannungsamplitude der Spannung der Hilfswicklung gegenüber der Zeit abbildet und wenigstens eine Kenngröße des dynamischen Prozesses des Motorstartvorgangs beinhaltet, wobei die Kenngröße des dynamischen Prozesses des Motorstartvorgangs anhand des mathematischen Modells und des Verlaufs der Amplitude oder des Effektivwertes der gemessenen Spannung der Hilfswicklung ermittelt wird und
    - der Zeitpunkt zur Trennung des Anlaufkondensators (4) mit Hilfe der ermittelten Kenngröße bestimmt wird

    **dadurch gekennzeichnet, dass**
    das wenigstens eine mathematische Modell das folgende erste mathematische Modell umfasst:

    $$U_H = U_{H\infty} - (U_{H\infty} - U_{H0})e^{-t/\tau}$$

    wobei $U_{H0}$ der Anfangswert der Hilfspannung ($U_H$) bei t=0, $U_{H\infty}$ der Endwert der Hilfsspannung ($U_H$) bei t=∞ sind und $\tau$ eine Zeitkonstante des ersten mathematischen Modells sowie die Kenngröße des dynamischen Prozesses des Motorstartvorgangs darstellt
    und/oder
    das wenigstens eine mathematische Modell das folgende zweite mathematische Modell umfasst:

    $$U_H = \sum_{i=0}^{n} a_i t^i ,$$

    wobei n > 2, $U_{H0}$ der Anfangswert der Hilfspannung ($U_H$) bei t=0, $U_{H\infty}$ der Endwert der Hilfsspannung ($U_H$) bei t=oo und $a_i$ Konstanten sind.

2.  Verfahren nach Anspruch 1, **dadurch gekennzeichnet, dass** die Kenngröße mit der ersten und/oder einer weiteren Ableitungsfunktionen ($d^n U_H/dt^n$) des Verlaufs der Amplitude oder des Effektivwertes der gemessenen Spannung der Hilfswicklung ermittelt wird.

3. Verfahren nach Anspruch 1 und 2, **dadurch gekennzeichnet, dass** zur Bestimmung des Zeitpunkts zur Trennung des Anlaufkondensators (4) die Zeitkonstante $\tau$ des ersten mathematischen Modells mit Hilfe der ersten und der zweiten Ableitungsfunktion ($dU_H/dt$, $d^2U_H/dt^2$) des Verlaufs der Amplitude oder des Effektivwertes der gemessenen Spannung der Hilfswicklung (2) ermittelt und verwendet wird.

4. Verfahren nach Anspruch 1 und 2, **dadurch gekennzeichnet, dass** zur Bestimmung des Zeitpunkts zur Trennung des Anlaufkondensators (4) zumindest ein Wendepunkt (36) des zweiten mathematischen Modells, welcher die Kenngröße des dynamischen Prozesses des Motorstartvorgangs darstellt, mit Hilfe der ersten und der zweiten Ableitungsfunktion ($dU_H/dt$, $d^2U_H/dt^2$) des Verlaufs der Amplitude oder des Effektivwertes der gemessenen Spannung der Hilfswicklung (2) ermittelt und verwendet wird.

5. Verfahren nach Anspruch 4, **dadurch gekennzeichnet, dass** der Wendepunkt des Verlaufs der Amplitude oder des Effektivwertes der gemessenen Spannung der Hilfswicklung (2) mit Hilfe des Maximums der ersten Ableitungsfunktion ($dU_H/dt$) des Verlaufs der Amplitude oder des Effektivwertes der gemessenen Spannung der Hilfswicklung (2) oder mit Hilfe des negativen Nulldurchgangs der zweiten Ableitungsfunktion ($d^2U_H/dt^2$) des Verlaufs der Amplitude oder des Effektivwertes der gemessenen Spannung der Hilfswicklung (2) ermittelt wird.

6. Verfahren nach Anspruch 1 und 2, **dadurch gekennzeichnet, dass** zur Bestimmung des Zeitpunkts zur Trennung des Anlaufkondensators (4) weiterhin ein Knickpunkt des zweiten mathematischen Modells mit Hilfe der ersten, der zweiten und der dritten Ableitungsfunktion ($dU_H/dt$, $d^2U_H/dt^2$, $d'U_H/dt^3$) des Verlaufs der Amplitude oder des Effektivwertes der gemessenen Spannung der Hilfswicklung (2) ermittelt und verwendet wird.

7. Verfahren nach Anspruch 1 und 2, **dadurch gekennzeichnet, dass** eine Überschreitung oder Unterschreitung eines vordefinierten Schwellwertes der Ableitungsfunktion n-ter Ordnung ($d^nU_H/dt^n$) des Verlaufs der Amplitude oder des Effektivwertes der gemessenen Spannung der Hilfswicklung (2) als Kriterium zur Trennung des Anlaufkondensators (4) verwendet wird.

8. Verfahren nach Anspruch 1, **dadurch gekennzeichnet, dass** zur Feststellung von kritischen Motorzuständen die erste Ableitungsfunktion ($dU_H/dt$) des Verlaufs der Amplitude oder des Effektivwertes der gemessenen Spannung der Hilfswicklung (2) verwendet wird, wobei ein kritischer Motorzustand dann erreicht ist, wenn

- die erste Ableitungsfunktion ($dU_H/dt$) des Verlaufs der Amplitude oder des Effektivwertes der gemessenen Spannung der Hilfswicklung (2) in einem vordefinierten Zeitraum ab Start des Asynchronmotors (4) eine vordefinierte Schwelle nicht überschritten hat, und/oder
- die erste Ableitungsfunktion ($dU_H/dt$) des Verlaufs der Amplitude oder des Effektivwertes der gemessenen Spannung der Hilfswicklung (2) für einen vordefinierten Zeitraum < 0 bleibt.

9. Verfahren nach Anspruch 1, **dadurch gekennzeichnet, dass** eine Kapazitätsänderung seit Inbetriebnahme des Anlaufkondensators (4) und die verbleibende Lebensdauer des Anlaufkondensators (4) mit Hilfe der zeitlichen Veränderung des Anfangswertes des Verlaufs der Amplitude oder des Effektivwertes der gemessenen Spannung der Hilfswicklung (2) ermittelt werden.

10. Verfahren nach Anspruch 1, **dadurch gekennzeichnet, dass** eine Kapazitätsänderung des Betriebskondensators (3) seit Inbetriebnahme und die verbleibende Lebensdauer des Betriebskondensators (3) mit Hilfe der zeitlichen Veränderung des Endwertes des gemessenen Spannungsverlaufs der Hilfswicklung (2) ermittelt werden.

11. Verfahren nach Anspruch 1 bis 10, **dadurch gekennzeichnet, dass** die Ableitungsfunktion ($dU_H/dt$) als Wertänderung ($U_{H2} - U_{H1}$) über eine vordefinierte Zeitspanne ($t_2 - t_1$) umgesetzt wird.

12. Asynchronmotor mit einer Hauptwicklung (1), einer Hilfswicklung (2), einem Anlaufkondensator (4) und einer Steuer- und Regeleinrichtung (7), wobei die Steuer- und Regeleinrichtung (7) mit einer Spannungsmesseinrichtung (8) zur Ermittlung des Verlaufs der Amplitude oder des Effektivwertes der gemessenen Spannung der Hilfswicklung (2) und einer Trenneinrichtung zur Trennung des Anlaufkondensators (4) in Verbindung steht, **dadurch gekennzeichnet, dass** die Steuer- und Regeleinrichtung (7) zur Ermittlung des Zeitpunkts zur Trennung des Anlaufkondensators (4) gemäß dem Verfahren nach Anspruch 1 ausgebildet ist.

13. Asynchronmotor nach Anspruch 12, **dadurch gekennzeichnet, dass** die Steuer- und Regeleinrichtung (7) Mittel zur Ermittlung der ersten und/oder weiteren Ableitungsfunktionen ($d^nU_H/dt^n$) des Verlaufs der Amplitude oder des Effektivwertes der gemessenen Spannung der Hilfswicklung (2) sowie Mittel zur Ermittlung des Zeitpunkts zur Trennung des Anlaufkondensators (4) in Abhängigkeit der ersten und/oder weiteren Ableitlungsfunktionen ($d^n U_H/dt^n$) des Verlaufs der Amplitude oder des Effektivwertes der gemessenen Spannung der Hilfswicklung (2) umfasst.

**Claims**

1. Method for operating an asynchronous motor comprising a main winding (1) and an auxiliary winding (2), wherein a start capacitor (4) is connected in series with the auxiliary winding (2) before the asynchronous motor is started up and is disconnected at a point in time, which is to be determined, after the asynchronous motor is started up whereby the voltage of the auxiliary winding (2) is measured, whereby

   - at least one mathematical model is used, which models the voltage amplitude of the voltage of the auxiliary winding in relation to time and includes at least one parameter of the dynamic process of the motor starting procedure, wherein the parameter of the dynamic process of the motor starting procedure is calculated on the basis of the mathematical model and the course of the amplitude or the effective value of the measured voltage of the auxiliary winding, and
   - the point in time for disconnecting the start capacitor (4) is determined by means of the determined parameter

   **characterized in that**
   at least one mathematical model comprises the following first mathematical model:

   $$U_H = U_{H\infty} - (U_{H\infty} - U_{H0})e^{-t/\tau}$$

   whereby the UH0 being the starting value of the auxiliary winding (UH) at t=0, UH∞ the final value of the auxiliary winding (UH) at t=oo a and $\tau$ being a time constant of the first mathematical model and constituting the parameter of the dynamic process of the motor starting procedure.

2. Method according to claim 1, **characterised in that** the parameter is determined with the first and/or a further derivative function ($d^n U_H/dt^n$) of the course of the amplitude or the effective value of the measured voltage of the auxiliary winding.

3. Method according to claims 1 and 2, **characterised in that** in order to determine the point in time for disconnecting the start capacitor (4), the time constant $\tau$ of the first mathematical model is determined and used by means of the first and second derivative functions ($dU_H/dt$, $d^2 U_H/dt^2$) of the course of the amplitude or the effective value of the measured voltage of the auxiliary winding (2).

4. Method according to claims 1 and 2, **characterised in that** in order to determine the point in time for disconnecting the start capacitor (4), at least one inflection point (36) of the second mathematical model, which constitutes the parameter of the dynamic process of the motor starting procedure, is determined and used by means of the first and second derivative functions ($dU_H/dt$, $d^2 U_H/dt^2$) of the course of the amplitude or the effective value of the measured voltage of the auxiliary winding (2).

5. Method according to claim 4, **characterised in that** the inflection point of the course of the amplitude or the effective value of the measured voltage of the auxiliary winding (2) is determined by means of the maximum of the first derivative function ($dU_H/dt$) of the course of the amplitude or the effective value of the measured voltage of the auxiliary winding (2) or by means of the negative zero crossing of the second derivative function ($d^2 U_H/dt^2$) of the course of the amplitude or the effective value of the measured voltage of the auxiliary winding (2).

6. Method according to claims 1 and 2, **characterised in that** in order to determine the point in time for disconnecting the start capacitor (4) furthermore a break point of the second mathematical model is determined and used by means of the first, the second and the third derivative functions ($dU_H/dt$, $d^2 U_H/dt^2$, $d^3 U_H/dt^3$) of the course of the amplitude or the effective value of the measured voltage of the auxiliary winding (2).

7. Method according to claims 1 and 2, **characterised in that** a deviation above or below a predefined threshold value of the derivative function of the $n^{th}$ order ($d^n U_H/dt^n$) of the course of the amplitude or the effective value of the measured voltage of the auxiliary winding (2) is used as a criterion for disconnecting the start capacitor (4).

8. Method according to claim 1, **characterised in that** in order to detect critical motor statuses, the first derivative function ($dU_H/dt$) of the course of the amplitude or the effective value of the measured voltage of the auxiliary winding (2) is used, a critical motor status being reached if

- the first derivative function ($dU_H/dt$) of the course of the amplitude or the effective value of the measured voltage of the auxiliary winding (2) has not exceeded a predefined threshold in a predefined period of time from the start-up of the asynchronous motor (4) and/or
- the first derivative function ($dU_H/dt$) of the course of the amplitude or the effective value of the measured voltage of the auxiliary winding (2) remains at < 0 for a predefined period of time.

9. Method according to claim 1, **characterised in that** a change in capacitance from activation of the start capacitor (4) and the remaining useful life of the start capacitor (4) are determined by means of the change over time of the starting value of the course of the amplitude or the effective value of the measured voltage of the auxiliary winding (2).

10. Method according to claim 1, **characterised in that** a change in capacitance of the run capacitor (3) from activation and the remaining useful life of the run capacitor (3) are determined by means of the change over time of the final value of the measured course of voltage of the auxiliary winding (2).

11. Method according to claims 1 to 10, **characterised in that** the derivative function ($dU_H/dt$) is implemented as a change in value ($U_{H2} - U_{H1}$) over a predefined interval ($t_2 - t_1$).

12. Asynchronous motor comprising a main winding (1), an auxiliary winding (2), a start capacitor (4) and a control device (7), the control device (7) being connected to a voltage measurement device (8) for determining the course of the amplitude or the effective value of the measured voltage of the auxiliary winding (2) and to a disconnecting device for disconnecting the start capacitor (4),
**characterised in that** the control device (7) is configured to determine the point in time for disconnecting the start capacitor (4) in accordance with the method according to claim 1.

13. Asynchronous motor according to claim 12, **characterised in that** the control device (7) comprises means for determining the first and/or further derivative functions ($d^nU_H/dt^n$) of the course of the amplitude or the effective value of the measured voltage of the auxiliary winding (2) as well as means for determining the point in time for disconnecting the start capacitor (4) on the basis of the first and/or further derivative functions ($d^nU_H/dt^n$) of the course of the amplitude or the effective value of the measured voltage of the auxiliary winding (2).

## Revendications

1. Procédé de fonctionnement d'un moteur asynchrone avec un bobinage principal (1) et un bobinage auxiliaire (2), où un condensateur de démarrage (4) pour le démarrage du moteur asynchrone est disposé en série avec le bobinage auxiliaire (2), qui est séparé à un certain moment suivant le démarrage du moteur asynchrone en ce que la tension du bobinage auxiliaire (2) est mesurée,
où

- au moins un modèle mathématique est utilisé, qui représente l'amplitude de la tension du bobinage auxiliaire (2) en fonction du temps et qui comporte au moins une valeur du processus dynamique du processus de démarrage du moteur, où la valeur du processus dynamique du processus de démarrage du moteur est déterminée à l'aide du modèle mathématique et de l'évolution de l'amplitude ou de la valeur efficace de la tension mesurée du bobinage auxiliaire, et
- le moment de la séparation du condensateur de démarrage (4) est déterminé à l'aide de la valeur déterminée,

**caractérisé en ce que**
le au moins un modèle mathématique comprend le premier modèle mathématique suivant :

$$U_H = U_{H\infty} - (U_{H\infty} - U_{H0})e^{-H\tau}$$

où $U_{H0}$ représente la valeur de départ de la tension auxiliaire ($U_H$) à t = 0, $U_{H\infty}$ représente la valeur finale de la tension auxiliaire ($U_H$) à t = ∞, et $\tau$ est une constante de temps du premier modèle mathématique, ainsi que la valeur du processus dynamique du processus de démarrage du moteur,
et/ou
le au moins un modèle mathématique comprend le deuxième modèle mathématique suivant :

$$U_H = \sum_{i=0}^{n} a_i t^i$$

où n>2, $U_{H0}$ représente la valeur de départ de la tension auxiliaire ($U_H$) à t = 0, $U_{H\infty}$ représente la valeur finale de la tension auxiliaire ($U_H$) à t = ∞, et les $a_i$ sont des constantes.

2. Procédé selon la revendication 1, **caractérisé en ce que** la valeur des dérivées première et seconde ($d''U_H/dt''$) de l'évolution de l'amplitude ou de la valeur efficace de la tension mesurée du bobinage auxiliaire est déterminée.

3. Procédé selon la revendication 1 ou 2, **caractérisé en ce que** pour déterminer le moment pour la séparation du condensateur de démarrage (4), la constante de temps $\tau$ du premier modèle mathématique est déterminée à l'aide des dérivées première et seconde ($dU_H/dt$, $d^2U_H/dt^2$) de l'évolution de l'amplitude ou de la valeur efficace de la tension mesurée du bobinage auxiliaire (2) et utilisée.

4. Procédé selon la revendication 1 ou 2, **caractérisé en ce que** pour déterminer le moment pour la séparation du condensateur de démarrage (4), au moins un point d'inflexion (36) du deuxième modèle mathématique, qui représente la valeur du processus dynamique du démarrage du moteur, est déterminé à l'aide des dérivées première et seconde ($dU_H/dt$, $d^2U_H/dt^2$) de l'évolution de l'amplitude ou de la valeur efficace de la tension mesurée du bobinage auxiliaire (2) et utilisée.

5. Procédé selon la revendication 4, **caractérisé en ce que** le point d'inflexion de l'évolution de l'amplitude ou de la valeur efficace de la tension mesurée du bobinage auxiliaire (2) est déterminé par le maximum de la dérivé première ($dU_H/dt$) de l'évolution de l'amplitude ou de la valeur efficace de la tension mesurée du bobinage auxiliaire (2) ou par le passage par zéro de la dérivée seconde ($d^2U_H/dt^2$) de l'évolution de l'amplitude ou de la valeur efficace de la tension mesurée du bobinage auxiliaire (2).

6. Procédé selon la revendication 1 ou 2, **caractérisé en ce que** pour déterminer le moment pour la séparation du condensateur de démarrage (4), le point d'inflexion du deuxième modèle mathématique est déterminé à l'aide des dérivées première, seconde et troisième ($dU_H/dt$, $d^2U_H/dt^2$, $d^3U_H/dt^3$) de l'évolution de l'amplitude ou de la valeur efficace de la tension mesurée du bobinage auxiliaire (2) et utilisée.

7. Procédé selon la revendication 1 ou 2, **caractérisé en ce qu'**un dépassement positif ou négatif d'une valeur seuil prédéfinie de la fonction dérivée d'ordre n ($d^nU_H/dt^n$) de l'évolution de l'amplitude ou de la valeur efficace de la tension mesurée du bobinage auxiliaire (2) est utilisée comme critère de séparation du condensateur de démarrage (4).

8. Procédé selon la revendication 1, **caractérisé en ce que** pour déterminer les états critiques du moteur, on utilise la dérivée première ($dU_H/dt$) de l'évolution de l'amplitude ou de la valeur efficace de la tension mesurée du bobinage auxiliaire (2), où un état critique du moteur est atteint si

- la dérivée première ($dU_H/dt$) de l'évolution de l'amplitude ou de la valeur efficace de la tension mesurée du bobinage auxiliaire (2) ne dépasse pas un seuil prédéfini au sein d'une période prédéfinie depuis le démarrage du moteur asynchrone (4), et/ou
- la dérivée première ($dU_H/dt$) de l'évolution de l'amplitude ou de la valeur efficace de la tension mesurée du bobinage auxiliaire (2) reste <0 pendant une période prédéfinie.

9. Procédé selon la revendication 1, **caractérisé en ce qu'**une modification de capacité dès la mise en service du condensateur de démarrage (4) et la durée de vie du condensateur de démarrage (4) est déterminée à l'aide de la modification au cours du temps de la valeur de départ de l'évolution de l'amplitude ou de la valeur efficace de la tension mesurée du bobinage auxiliaire (2).

**10.** Procédé selon la revendication 1, **caractérisé en ce qu'**une modification de capacité du condensateur de service (3) dès la mise en service et la durée de vie du condensateur de service (3) est déterminée à l'aide de la modification au cours du temps de la valeur finale de l'évolution de la tension mesurée du bobinage auxiliaire (2).

**11.** Procédé selon les revendications 1 à 10, **caractérisé en ce que** la dérivée ($dU_H/dt$) est calculée par la différence ($U_{H2}$ - $U_{H1}$) sur un intervalle de temps ($t_1$ - $t_2$).

**12.** Moteur asynchrone avec un bobinage principal (1), un bobinage auxiliaire (2), un condensateur de démarrage (4) et un dispositif de commande et de réglage (7), où le dispositif de commande et de réglage (7) est relié à un dispositif de mesure de la tension (8) pour déterminer l'évolution de l'amplitude ou de la valeur efficace de la tension mesurée du bobinage auxiliaire (2) et un dispositif de séparation pou séparer le condensateur de démarrage (4), **caractérisé en ce que** le dispositif de commande et de réglage (7) est destiné à la détermination du moment de la séparation du condensateur de démarrage (4) selon le procédé de la revendication 1.

**13.** Moteur asynchrone selon la revendication 12, **caractérisé en ce que** le dispositif de commande et de réglage (7) comprend un moyen pour la détermination des dérivées première et/ou autres ($d"U_H/dt"$) de l'évolution de l'amplitude ou de la valeur efficace de la tension mesurée du bobinage auxiliaire (2) ainsi qu'un moyen pour déterminer le moment de la séparation du condensateur de démarrage (4) en fonction des dérivées première et/ou autres ($d"U_H/dt"$) de l'évolution de l'amplitude ou de la valeur efficace de la tension mesurée du bobinage auxiliaire (2).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070057647 A1
- DE 60024487 T2
- DE 102004012635 A1
- EP 1671415 B1
- EP 2287494 A2